# EUROPEAN PATENT APPLICATION

(11) **EP 4 224 232 A1**
(43) Date of publication of application: **09.08.2023**
(21) Application number: 23154848.8
(22) Date of filing: 03.02.2023
(51) Int. Cl.: G02B 7/00

(54) **OPTICAL FILTER APPARATUS AND IMAGE PICKUP APPARATUS**

(30) Priority: 07.02.2022 JP 2022017127
(71) Applicant: CANON KABUSHIKI KAISHA, Tokyo 146-8501 (JP)
(72) Inventor: KIMURA, Yasunori, Tokyo 146-8501 (JP)
(74) Representative: TBK

(57) **Abstract**

An optical filter apparatus (1) includes a first optical filter unit (202, 203), a first holding frame (201), a first guide bar (204) and a second guide bar (205), a second optical filter unit (302, 303) disposed approximately parallel to the first optical filter unit, a second holding frame that holds the second optical filter unit, a third guide bar (304) and a fourth guide bar (304) that movably support the second holding frame, a first housing(10) that covers the first holding frame, and a second housing (40) that covers the second holding frame. The first holding frame is sandwiched between the first housing and one of the first guide bar and the second guide bar. The second holding frame is sandwiched between the second housing and one of the third guide bar and the fourth guide bar.

## Description

### BACKGROUND

### Technical Field

One of the aspects of the disclosure relates to an optical filter apparatus and an image pickup apparatus.

### Description of the Related Art

An image pickup apparatus including a camera mount with a short flange focal length distance is demanded to be thin in an optical axis direction of an optical filter apparatus located between a mount surface and an image sensor. An optical filter apparatus including a plurality of optical filters particularly needs to be made thin.

Japanese Patent Laid-Open No. ("JP") 2020-134889 discloses an optical filter apparatus in which a position of a guide bar that holds a frame of an optical filter is shifted in order to reduce the thickness in the optical axis direction.

The optical filter apparatus disclosed in JP 2020-134889 is thin in the optical axis direction, but this thinning scheme is insufficient depending on the structure of the image pickup apparatus.

### SUMMARY

The disclosure provides an optical filter apparatus that is thinner in an optical axis direction.

The present invention in its first aspect provides an optical filter apparatus as specified in claims 1 to 9.

The present invention in its second aspect provides an image pickup apparatus as specified in claims 10 to 13.

Further features of the disclosure will become apparent from the following description of exemplary embodiments with reference to the attached drawings.

### BRIEF DESCRIPTION OF THE DRAWINGS

FIG. 1 is an external perspective view of an image pickup apparatus according to this embodiment.
FIG. 2 is a block diagram of the image pickup apparatus according to this embodiment.
FIG. 3 is an external perspective view of an optical filter apparatus according to this embodiment.
FIG. 4 is an exploded perspective view of the optical filter apparatus according to this embodiment.
FIG. 5 is a sectional view of the optical filter apparatus according to this embodiment.
FIG. 6 is a sectional view around a second guide bar in the optical filter apparatus according to this embodiment.
FIG. 7 is a sectional view around a fourth guide bar in the optical filter apparatus according to this embodiment.

### DESCRIPTION OF THE EMBODIMENTS

Referring now to the accompanying drawings, a detailed description will be given of embodiments according to the disclosure.

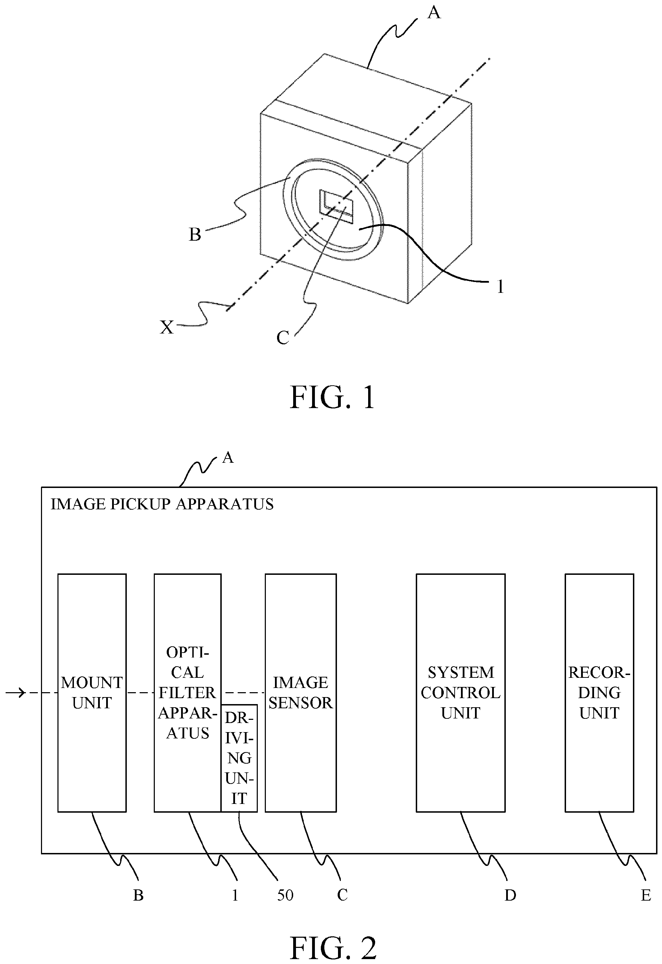

Referring now to FIGs. 1 and 2, a description will be given of an image pickup apparatus having an optical filter apparatus according to this embodiment. FIG. 1 is an external perspective view of an image pickup apparatus A. The image pickup apparatus A includes, in order from the object side to the image side, a mount unit B to which an interchangeable lens (lens apparatus) is detachably attached, an optical filter apparatus 1, and an image sensor C. The optical filter apparatus 1 functions to adjust light incident on the image sensor C, and is disposed between the mount unit B and the image sensor C. The mount unit B has a mechanical structure for making the interchangeable lens attachable to and detachable from the image pickup apparatus A. The mount unit B has electrical contacts and is electrically connected to the interchangeable lens.

FIG. 2 is a block diagram of the image pickup apparatus A. The image pickup apparatus A includes the mount unit B, the optical filter apparatus 1, the image sensor C, a system control unit D, and a recording unit E. The image sensor C is a photoelectric conversion element, such as a CCD sensor or a CMOS sensor, which images (receives) light that has passed through the interchangeable lens (imaging optical system) and the optical filter apparatus 1, and outputs the captured image (image data) to the system control unit D. The system control unit D includes a microprocessor, such as a CPU, and controls the image pickup apparatus A according to operation instructions of the image pickup apparatus A. The recording unit E includes a flash memory such as SRAM, DRAM, and SSD, and stores a program necessary for the system control unit D to control each component such as the image sensor C in the image pickup apparatus A. The image pickup apparatus A has a short distance from the mount unit B to the image sensor C or a short flange focal length. Therefore, the optical filter apparatus 1 disposed between the mount unit B and the image sensor C is demanded to be thinner.

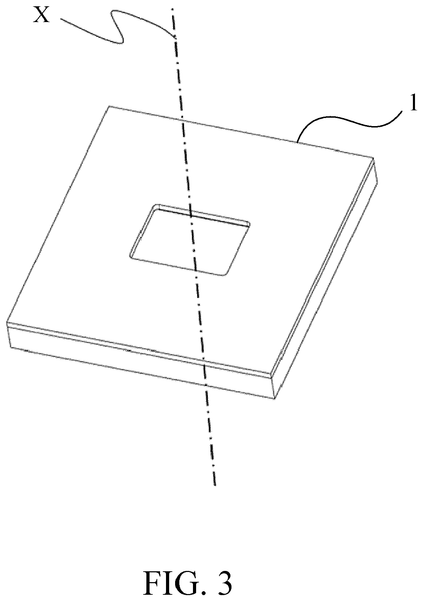

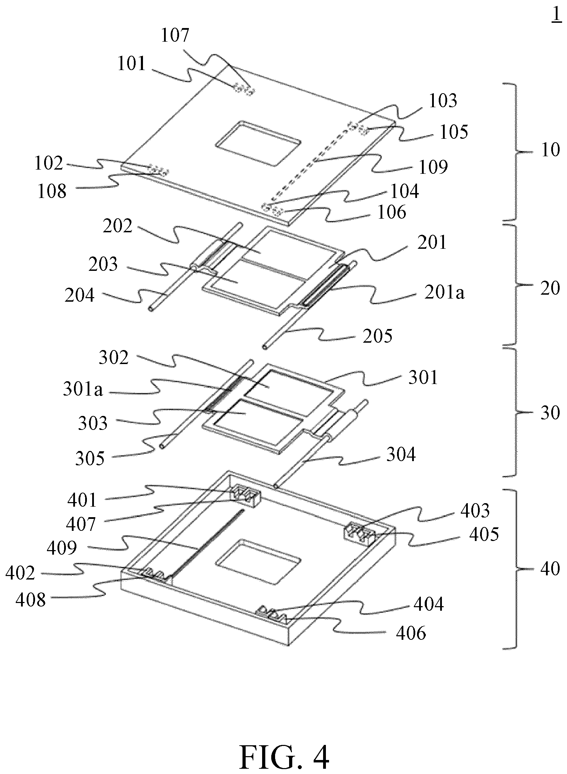

Referring now to FIGs. 3 to 7, a description will be given of the optical filter apparatus 1. FIG. 3 is an external perspective view of the optical filter apparatus 1. FIG. 4 is an exploded perspective view of the optical filter apparatus 1.

The optical filter apparatus 1 includes a first housing 10, a first unit 20, a second unit 30, and a second housing 40, as illustrated in FIGs. 3 and 4. The first housing 10 and the second housing 40 are fixed by a fixing unit such as unillustrated screws. The first unit 20 and the second unit 30 are disposed side by side in parallel and are covered with the first housing 10 and the second housing 40. The first unit 20 includes a first optical filter 202 and a second optical filter 203. The first optical filter 202 and the second optical filter 203 constitute a first optical filter unit. The second unit 30 includes a third optical filter 302 and a fourth optical filter 303. The third optical filter 302 and the fourth optical filter 303 constitute a second optical filter unit.

The first optical filter 202 and the second optical filter 203 are held by a first holding frame 201. The first holding frame 201 is slidable along a first guide bar 204 and a second guide bar 205 extending in directions orthogonal to the optical axis X of the image sensor C so that the first optical filter 202 and the second optical filter 203 are switched. The third optical filter 302 and the fourth optical filter 303 are held by a second holding frame 301. The second holding frame 301 is slidable along a third guide bar 304 and a fourth guide bar 305 extending in the directions orthogonal to the optical axis X of the image sensor C so that the third optical filter 302 and the fourth optical filter 303 are switched.

The first holding frame 201 is supported so as to cover the entire circumference of the first guide bar 204. The second holding frame 301 is supported so as to cover the entire circumference of the third guide bar 304. A portion of the first holding frame that covers the entire circumference of the first guide bar, and a portion of the second holding frame that covers the entire circumference of the third guide bar are located on opposite sides with respect to the optical axis X of the optical filter apparatus. This configuration can achieve a thinner structure of the optical filter apparatus. The first guide bar 204 is supported by a first convex portion 101 and a second convex portion 102 of the first housing 10 and a first concave portion 401 and the second concave portion 402 of the second housing 40. The second guide bar 205 is supported by convex portions 103 and 104 of the first housing 10 and concave portions 403 and 404 of the second housing 40. The third guide bar 304 is supported by convex portions 105 and 106 of the first housing 10 and concave portions 405 and 406 of the second housing 40. The fourth guide bar 305 is supported by convex portions 107 and 108 of the first housing 10 and concave portions 407 and 408 of the second housing 40.

An end (first end) 201a of the first holding frame 201 is sandwiched between the second guide bar 205 and the first housing 10. An end (second end) 301a of the second holding frame 301 is sandwiched between the fourth guide bar 305 and the second housing 40. The first guide bar 204, the second guide bar 205, the third guide bar 304, and the fourth guide bar 305 are disposed at positions that approximately coincide with each other in the optical axis direction (X direction). The first guide bar 204 is disposed outside the fourth guide bar 305 with respect to the first holding frame 201. The third guide bar 304 is disposed outside the second guide bar 205 with respect to the second holding frame 301. Thereby, the optical filter apparatus 1 can be thin in the optical axis direction (X direction).

A driving unit 50 (see FIG. 2) is provided inside the first housing 10 and the second housing 40. The driving unit 50 drives the first holding frame 201 and the second holding frame 301. The driving unit 50 slides the first holding frame 201 along the first guide bar 204 and thereby inserts or retracts the first optical filter unit into and from the optical axis. The driving unit 50 slides the second holding frame 301 along the third guide bar 304 and thereby inserts or retracts the second optical filter unit into and from the optical axis. The first optical filter 202 and the second optical filter 203 are switched by driving the first holding frame 201 in this way. The third optical filter 302 and the fourth optical filter 303 are switched by driving the second holding frame 301.

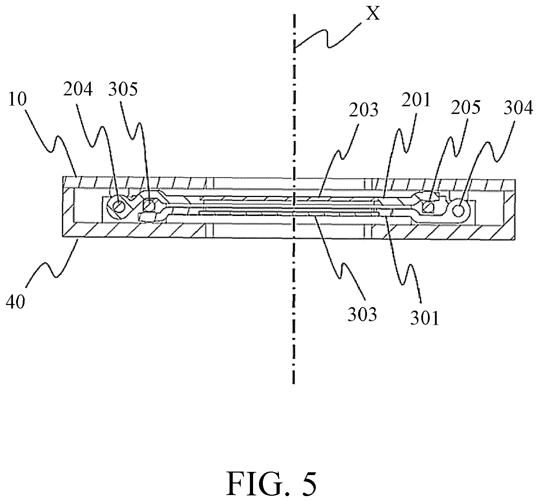

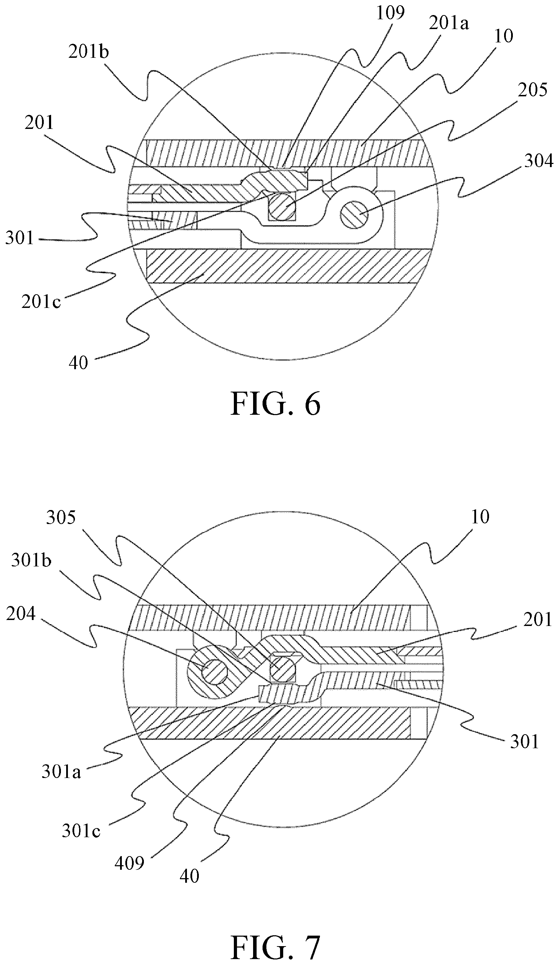

FIG. 5 is a sectional view of the optical filter apparatus 1. FIG. 6 is a sectional view around the second guide bar 205. FIG. 7 is a sectional view around the fourth guide bar 305.

The first housing 10 has a convex portion (first housing convex portion) 109 facing the second guide bar 205. The first holding frame 201 includes a convex portion (first convex portion) 201b and a convex portion (third convex portion) 201c on the end 201a. The convex portion 201c faces the second guide bar 205. In a case where the first holding frame 201 is driven, the convex portion 109 of the first housing 10 and the convex portion 201b of the first holding frame 201 slide relative to each other, and the convex portion 201c of the first holding frame 201 and the second guide bar 205 slide relative to each other. The second housing 40 has a convex portion (second housing convex portion) 409 facing the fourth guide bar 305. The second holding frame 301 has a convex portion (fourth convex portion) 301b and a convex portion (second convex portion) 301c on the end 301a. The convex portion 301b faces the fourth guide bar 305. In a case where the second holding frame 301 is driven, the convex portion 409 of the second housing 40 and the convex portion 301c of the second holding frame 301 slide relative to each other, and the convex portion 301b of the second holding frame 301 and the fourth guide bar 305 slide relative to each other.

As described above, in the optical filter apparatus 1, the first holding frame 201 is slidably sandwiched between the first housing 10 and the first guide bar 204 or the second guide bar 205, and the second holding frame 301 is slidably sandwiched between the second housing 40 and the third guide bar 304 or the fourth guide bar 305. The first holding frame 201 may include a first end (end 201a) located on the side opposite to the first guide bar 204 with respect to the first optical filter unit, and is slidably sandwiched between the first housing 10 and the second guide bar 205 at the first end. The second holding frame 301 may include a second end (end 301a) located on the side opposite to the third guide bar 304 with respect to the second optical filter unit, and is slidably sandwiched between the second housing 40 and the fourth guide bar 305 at the second end.

This embodiment can reduce the thickness in the optical axis direction (X direction) in the optical filter apparatus that can switch between a plurality of optical filters. In this embodiment, the optical filter is, for example, a neutral density filter, an infrared (IR) cut filter, a polarization filter, dummy glass, or the like, but is not limited to this example. In this embodiment, the number of optical filters and the number of combination types of the optical filters can be arbitrarily set. In this embodiment, the material, shape, size, form, number, location, etc. of each component of the optical filter apparatus can be properly changed. This embodiment can provide an optical filter apparatus and an image pickup apparatus, each of which is thin in the optical axis direction.

The driving unit 50 includes a first driving unit configured to drive the first holding frame 201 and a second driving unit configured to drive the second holding frame 301. The second guide bar 205 is farther from the first driving unit than the first guide bar 204, and the fourth guide bar 305 is farther from the second driving unit than the third guide bar 304. This configuration can provide stable driving.

While the disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

An optical filter apparatus (1) includes a first optical filter unit (202, 203), a first holding frame (201), a first guide bar (204) and a second guide bar (205), a second optical filter unit (302, 303) disposed approximately parallel to the first optical filter unit, a second holding frame that holds the second optical filter unit, a third guide bar (304) and a fourth guide bar (304) that movably support the second holding frame, a first housing(10) that covers the first holding frame, and a second housing (40) that covers the second holding frame. The first holding frame is sandwiched between the first housing and one of the first guide bar and the second guide bar. The second holding frame is sandwiched between the second housing and one of the third guide bar and the fourth guide bar.

## Claims

1. An optical filter apparatus (1) comprising:
a first optical filter unit (202, 203);
a first holding frame (201) that holds the first optical filter unit;
a first guide bar (204) and a second guide bar (205) that movably support the first holding frame;
a second optical filter unit (302, 303) disposed approximately parallel to the first optical filter unit;
a second holding frame (301) that holds the second optical filter unit;
a third guide bar (304) and a fourth guide bar (305) that movably support the second holding frame;
a first housing (10) that covers the first holding frame; and
a second housing (40) that covers the second holding frame,
**characterized in that** the first holding frame is sandwiched between the first housing and one of the first guide bar and the second guide bar, and
wherein the second holding frame is sandwiched between the second housing and one of the third guide bar and the fourth guide bar.

2. The optical filter apparatus according to claim 1, **characterized in that** the first holding frame includes a first end (201a) located on a side opposite to the first guide bar with respect to the first optical filter unit, and is slidably sandwiched between the first housing and the second guide bar at the first end,
wherein the second holding frame includes a second end (301a) located on a side opposite to the third guide bar with respect to the second optical filter unit, and is slidably sandwiched between the second housing and the fourth guide bar at the second end.

3. The optical filter apparatus according to claim 2, **characterized in that** the first housing includes a first housing convex portion (109),
wherein the first holding frame includes a first convex portion (101) that slides relative to the first housing convex portion at the first end,
wherein the second housing includes a second housing convex portion (409),
wherein the second holding frame includes a second convex portion (102) that slides relative to the second housing convex portion at the second end.

4. The optical filter apparatus according to claim 2 or 3, **characterized in that** the first holding frame includes a third convex portion (201c) on the first end facing the second guide bar,
wherein the second holding frame includes a fourth convex portion (301b) on the second end facing the fourth guide bar.

5. The optical filter apparatus according to any one of claims 1 to 4, **characterized in that** the first guide bar is disposed outside the fourth guide bar with respect to the first holding frame,
wherein the third guide bar is disposed outside the second guide bar with respect to the second holding frame.

6. The optical filter apparatus according to any one of claims 1 to 5, **characterized in that** the first holding frame is supported so as to cover an entire circumference of the first guide bar,
wherein the second holding frame is supported so as to cover an entire circumference of the third guide bar.

7. The optical filter apparatus according to claim 6, wherein a portion of the first holding frame that covers the entire circumference of the first guide bar, and a portion of the second holding frame that covers the entire circumference of the third guide bar are located on opposite sides with respect to an optical axis (X) of the optical filter apparatus.

8. The optical filter apparatus according to any one of claims 1 to 7, **characterized in that** the first housing includes a first housing convex portion (109) facing the second guide bar,
wherein the second housing includes a second housing convex portion (409) facing the fourth guide bar.

9. The optical filter apparatus according to any one of claims 1 to 8, **characterized in that** the first optical filter unit includes a first optical filter (202) and a second optical filter (203),
wherein the second optical filter unit includes a third optical filter (302) and a fourth optical filter (303).

10. An image pickup apparatus (A) comprising:
the optical filter apparatus (1) according to any one of claims 1 to 8; and
an image sensor (C) that receives light that has passed through the imaging optical system and the optical filter apparatus.

11. The image pickup apparatus according to claim 9, wherein the first guide bar, the second guide bar, the third guide bar, and the fourth guide bar are disposed at positions that approximately coincide with each other in an optical axis direction of the imaging optical system.

12. The image pickup apparatus according to claim 10 or 11, further comprising a driving unit (50) configured to drive the first holding frame and the second holding frame,
wherein the driving unit slides the first holding frame along the first guide bar, and thereby moves the first optical filter unit, and
wherein the driving unit slides the second holding frame along the third guide bar, and thereby moves the second optical filter unit.

13. The image pickup apparatus according to claim 12, wherein the driving unit includes a first driving unit configured to drive the first holding frame and a second driving unit configured to drive the second holding frame,
wherein the second guide bar is farther from the first driving unit than the first guide bar, and
wherein the fourth guide bar is farther from the second driving unit than the third guide bar.
